# FASCICULE DE BREVET EUROPEEN

(11) **EP 4 537 923 B1**
(45) Date de publication et mention de la délivrance du brevet: **09.12.2026**
(21) Numéro de dépôt: 24188402.2
(22) Date de dépôt: 12.07.2024
(51) Int. Cl.: B01D 46/02, B01D 46/06

(54) **DISPOSITIF DE FILTRATION D'AIR À MANCHES DE FILTRAGE ET PROCÉDÉS DE MONTAGE ET DE TENSION CORRESPONDANTS**
LUFTFILTERVORRICHTUNG MIT FILTERSCHLÄUCHEN UND VERFAHREN ZUR MONTAGE UND SPANNUNG DAFÜR
AIR FILTRATION DEVICE WITH FILTERING SLEEVES AND CORRESPONDING MOUNTING AND TENSIONING METHODS

(30) Priorité: 12.10.2023 FR 2310933
(43) Date de publication de la demande: 16.04.2025
(73) Titulaire: Cattinair, 25600 Brognard (FR)
(72) Inventeur: FAUCOGNEY, Julien, 70160 Cubry-les-Faverney (FR)
(74) Mandataire: Gauche, Raynald André

(56) Documents cités:
- FR-A- 446 489
- FR-B1- 2 856 936
- GB-A- 191 221 200
- GB-A- 442 797

## Description

### Domaine technique de l'invention

La présente invention a pour objet un dispositif de filtration d'air du type à manches de filtrage. Elle concerne également un procédé de montage de manches de filtrage au sein du dispositif, ainsi qu'un procédé de mise en tension desdites manches de filtrage adaptées audit dispositif. Elle concerne en outre une manche de filtrage adaptée à un tel dispositif, et une installation comportant un tel dispositif.

### Etat de la technique

Par le terme dispositif de filtration d'air du type à manches de filtrage, on désigne notamment un dépoussiéreur à pré-séparation cyclonique pour filtrer des flux d'air nécessaires au transport de polluants. Ce dépoussiéreur peut être intégré dans une installation permettant de capter, directement à la source, lesdits polluants pour ensuite les filtrer et les récupérer. Un tel dépoussiéreur est de manière connue proposé depuis des années dans le commerce sous le nom commercial "Cyclofiltre^{®}".

Un tel dispositif de filtration d'air du type à manches de filtrage de ce genre est décrit dans les documents tels que, par exemple, FR 2 856 936, GB 442 797, GB 21 200 ou encore FR 446 489.

Ainsi, le document FR 2 856 936 enseigne que ce type de dispositif assure l'extraction d'éléments en suspension dans une atmosphère puisée de locaux particuliers, par exemple de locaux de production, de traitement ou de stockage de produits pulvérulents, ou de certaines industries entraînant l'émission de déchets, tels que des sciures ou des copeaux très volatils.

Ce type de dispositif enseigné dans le document FR 2 856 936 est constitué de manière connue de trois éléments principaux généralement centrés sur un même axe vertical :
- un corps supérieur, cylindrique ou tronconique, dans lequel s'effectue l'arrivée tangentielle de l'air à dépoussiérer,
- une chambre de sédimentation, en forme d'entonnoir ou cylindrique, disposée sous le corps supérieur ; cette chambre étant munie de moyens de reprise des déchets à sa partie inférieure, et
- une cartouche filtrante constituée de manches de filtrage verticales qui s'étendent entre ladite chambre de sédimentation et une coiffe où l'air filtré est évacué.

Les manches de filtrage correspondantes ont une forme générale cylindrique et elles sont classiquement réalisées en matériau du type feutre aiguilleté, ou tout autre matériau résistant permettant une filtration équivalente.

Le document FR 2 856 936 enseigne de manière connue que ces manches sont tendues verticalement au sein de la cartouche filtrante entre deux structures supports adaptées :
- leurs extrémités inférieures sont solidarisées sur une structure support inférieure, par exemple en forme de grille, qui est située au-dessus de la chambre de sédimentation, et qui permet l'accès de l'air vicié sur le côté extérieur des manches de filtrage;
- leurs extrémités supérieures sont solidarisées sur une structure support supérieure, généralement en forme de plateau à ouvertures circulaires, pour permettre l'évacuation de l'air filtré.

Le montage de chaque manche de filtrage au sein de ce genre de dispositif consiste tout d'abord à solidariser leur extrémité supérieure au niveau de l'une des ouvertures du plateau supérieur. Cette solidarisation est traditionnellement obtenue au moyen d'un organe intégré en forme d'anneau déformable (appelé dans le métier communément 'snap ring") dans la manche de filtrage.

L'extrémité inférieure de la manche est ensuite fixée sur la structure support inférieure. Pour cela, l'extrémité correspondante est munie d'une platine de fond dotée d'une tige saillante, laquelle tige saillante est destinée à traverser un orifice complémentaire aménagé dans un profilé constitutif de la structure support inférieure.

De manière connue, la tige saillante en question comporte un filetage qui coopère avec un écrou pour assurer le maintien en position de la manche ; la mise en tension adéquate de chaque manche est obtenue par une opération de serrage appropriée de cet écrou.

En raison d'un environnement pouvant comporter des poussières ou des déchets explosifs, les éléments constitutifs de la structure support inférieure et la tige saillante sont en des matériaux qui ne permettent pas la formation d'étincelles en cas de chocs ou frottements.

Mais en raison de la structure actuelle des dispositifs de filtration, un opérateur doit accéder à la structure support inférieure pour effectuer la plupart des opérations de montage et de maintenance relatives aux manches de filtrage.

Or, les interventions correspondantes ne sont pas très pratiques à réaliser à cause des espaces exigus entre les manches.

De plus, ces interventions sont réalisées dans des ambiances poussiéreuses et sales ; elles peuvent être dangereuses pour l'opérateur du fait des poussières en présence, dont certaines peuvent présenter des risques pour la santé, en particulier dans le cadre d'équipements traitant des atmosphères pouvant comporter dans certain cas des caractéristiques explosives ou inflammables.

C'est pourquoi le document FR 2 856 936 propose comme solution répondant à ces problèmes de l'art antérieur un dispositif de filtration d'air du type à manches de filtrage décrit dans le document FR 2 856 936, comportant additionnellement une cartouche filtrante constituée de manches de filtrage tendues verticalement, avec des moyens de fixation haut et bas des manches de filtrage adaptés pour permettre un réglage de la tension de chaque manche au niveau de leur extrémité supérieure. Cela permet qu'un opérateur puisse en conséquence effectuer la plupart des opérations de montage et de maintenance au niveau de la structure support supérieure des manches, ceci dans une ambiance sécurisée et peu polluée.

Le document FR 2 856 936 enseigne plus précisément un anneau déformable avec une rainure annulaire extérieure et périphérique, cet anneau étant destiné à venir se positionner au sein des manches en partie supérieure, une fois les manches fixées sur la structure support inférieure, et tendues, de sorte à maintenir lesdites manches dans cet état tendu par serrage contre le contour des ouvertures de la structure support supérieure.

Le document FR 2 856 936 enseigne que l'extrémité inférieure des manches de filtrage est dotée d'une coupelle de fond, munie d'une tige saillante comportant un élément d'accrochage. Cet élément d'accrochage est destiné à coopérer avec un profilé support de conformation adaptée, aménagé au niveau de la structure support inférieure en forme de tôle pliée. Ce profilé est constitué d'une partie centrale s'étendant à la verticale, et dont l'extrémité supérieure est prolongée par un élément de retour à l'équerre ou sensiblement à l'équerre s'étendant sur toute sa longueur, et muni de plusieurs fentes ouvertes assurant chacune le passage d'une tige saillante de manche et le positionnement de l'élément d'accrochage de ladite tige saillante.

L'extrémité supérieure du ou des profilés supports comporte un élément de retour constitué de deux parties formant un dièdre, une partie s'étendant à l'équerre ou sensiblement à l'équerre à partir de l'extrémité supérieure de la partie centrale du profilé support, l'autre partie s'étendant en biais vers le bas.

Le document FR 2 856 936 enseigne également un moyen de traction de l'extrémité supérieure d'une manche de filtrage sous la forme d'un outil manuel, et un moyen de manœuvre dudit moyen de traction.

Le document FR 2 856 936 enseigne également un procédé de montage particulier d'une manche de filtrage au sein d'un dispositif de filtration d'air qui consiste principalement et successivement :
- à fixer l'extrémité inférieure de la manche de filtrage, par un moyen de fixation approprié, sur la structure support inférieure,
- à mettre en tension la manche de filtrage par une traction verticale, régulière et constante, notamment comprise entre trente (30) et quarante (40) kilogrammes, soit une force de traction comprise entre deux cent quatre-vingt-quatorze (294) Newton et trois cent quatre-vingt-douze (392) Newton, et
- à fixer l'extrémité supérieure de la manche de filtrage sur la structure support supérieure par un moyen de fixation adapté.

L'opération d'accrochage des manches présente l'avantage de pouvoir être réalisée à partir de la zone supérieure de la cartouche, au niveau de la coiffe.

Pour cela, l'opérateur maintient l'extrémité supérieure de la manche et effectue un léger balancement de cette manche de sorte à positionner l'élément d'accrochage dans l'une des fentes. La fixation de l'extrémité inférieure des manches sur la structure support inférieure s'effectue ainsi depuis le haut sans nécessiter d'outillage particulier.

Cette solution présente cependant l'inconvénient d'être peu précise, l'accroche par balancement pouvant être hasardeuse et fastidieuse dans le cas d'un grand nombre de manches de filtrage.

De plus, la mise en tension successive des manches avec un outil manuel est une tâche répétitive et manuelle, et demande un effort physique conséquent.

La mise en tension d'une manche se fait par un outil de tension manuel qui est installé au niveau d'une manche de filtrage pour mettre en tension ladite manche. L'outil est ensuite désinstallé puis déplacé à une autre manche et ainsi de suite.

La tension exercée sur chaque manche peut différer suivant l'appréciation de l'opérateur et ainsi différer grandement par rapport à une valeur de tension visée.

En outre, la mise en tension successive des manches peut occasionner des déformations mécaniques des supports, au fur et à mesure de la mise en tension des manches.

Dans le cas d'une tension appliquée à chaque manche de filtrage comprise entre trente (30) et quarante (40) kilogrammes, soit une force de traction comprise entre deux cent quatre-vingt-quatorze (294) Newton et trois cent quatre-vingt-douze (392) Newton, dans une cartouche filtrante comportant quarante (40) manches, cela représente une tension totale exercée sur les supports entre mille deux cents (1200) et mille six cents (1600) kilogrammes, soit une force exercée entre onze mille sept cent vingt (11720) Newton et quinze mille six cent quatre-vingts (15680) Newton. Ces valeurs approximatives sont calculées en considérant l'unité "g" de pesanteur terrestre comme égale à 9,8 m/s².

Il convient de noter qu'il existe des cartouches filtrantes comportant plus de trois cent cinquante (350) manches de filtrage, ce qui génère une tension importante sur les supports, comprise entre dix (10) et quatorze (14) tonnes soit une force exercée comprise entre cent mille (100 000) et cent trente-sept mille (137 000) Newton. Ainsi, il est nécessaire de vérifier, une fois toutes les manches calibrées successivement, les tensions des première manches mises en tension, et les réajuster, ce qui augmente les manipulations. En fait, l'opération de tension doit être réalisée plusieurs fois pour que toutes les manches soient tendues de manière satisfaisante.

Une disparité excessive de tension appliquée aux différentes manches du dispositif occasionne des problèmes, notamment :
- un colmatage à cœur plus rapidement des manches en cas de surtension, ce qui augmente les pertes de charge du dispositif, et augmente des consommations énergétiques des systèmes de ventilation associés au dispositif,
- une usure prématurée des manches les fragilisant et augmentant le risque qu'elles se déchirent dans le cas d'une surtension, et
- une tension des manches aléatoire, rendant irrégulier le décolmatage de l'ensemble des manches. Il faut alors augmenter la fréquence des décolmatages pour limiter les pertes de charges, ce qui augmente la consommation d'air comprimé.

Un autre problème de ce dispositif réside dans le fait que les manches s'allongent et se détendent progressivement au cours de leurs cycles de vie et en utilisation normale. Cela diminue l'efficacité de filtration du dispositif.

Pour remédier à cela, une opération de maintenance régulière est nécessaire pour qu'un opérateur vienne retendre l'ensemble des manches de filtrage.

Cette opération étant coûteuse, peu d'industriels l'effectuent, ce qui nuit à la consommation de la partie aéraulique et au système de décolmatage à air comprimé.

### Résumé de l'invention

La présente invention vise à remédier à ces inconvénients en proposant un dispositif de filtration d'air à manches de filtrage permettant de faciliter des opérations de montage et de maintenance de manches de filtrage dans ledit dispositif pour du personnel d'intervention.

Un autre objectif de l'invention est de proposer un dispositif dont la maintenance est facilitée en limitant les interventions dans la zone inférieure dangereuse du dispositif. Un autre objectif est de proposer un dispositif économique et sécurisé, et comportant des moyens de tension des manches de filtrage permettant de tendre les manches de filtrage de manière simplifiée, précise et rapide.

Un autre objectif est de proposer un dispositif apte à compenser des variations de longueur des manches du fait de leur production ou du fait d'une élongation progressive dans le temps.

Un autre objectif est de proposer un procédé de montage et de maintenance de manches de filtrage dans un dispositif de filtration d'air à manches de filtrage. Conformément à l'invention, il est donc proposé un dispositif de filtration d'air à manches de filtrage comportant :
- un corps supérieur d'où l'air filtré par le dispositif est évacué,
- une chambre de sédimentation notamment en forme d'entonnoir ou cylindrique, disposée sous ledit corps supérieur, et munie de moyens de reprise des déchets à sa partie inférieure,
- une cartouche filtrante verticale comportant une enveloppe notamment cylindrique périphérique et au moins deux manches de filtrage s'étendant dans l'enveloppe notamment cylindrique périphérique entre ladite chambre de sédimentation et une coiffe du corps supérieur, lesdites manches étant rattachées sensiblement verticalement au sein de la cartouche filtrante, d'une part à une structure support inférieure par des organes de crochetage des extrémités inférieures des manches, et d'autre part à une structure support supérieure en forme de plateau à ouvertures notamment circulaires par des organes d'assemblage des extrémités supérieures des manches, et
- des moyens de mise sous tension de l'ensemble des manches de filtrage à une tension moyenne déterminée ledit dispositif de filtration d'air à manches de filtrage étant remarquable en ce que les moyens de mise sous tension de l'ensemble des manches de filtrage sont sous la forme de moyens de translation de la structure support inférieure par rapport à la structure support supérieure, ladite structure support supérieure étant montée fixement par rapport au corps supérieur.

Cela permet de simplifier la mise sous tension des manches de filtrage. En écartant verticalement les structures support inférieure et supérieure l'une de l'autre, cela permet d'étirer simultanément toutes les manches et cela permet de les soumettre à une même tension moyenne déterminée. Le fait de mettre et de maintenir en tension toutes les manches ensemble permet d'économiser du temps et de limiter que des portions des structures de support inférieure ou de support supérieure ne se déforment localement et influent sur le réglage des tensions des manches. Le dispositif ainsi obtenu permet de faciliter le montage de l'ensemble des manches et leur mise en tension.

Le document FR 2 856 936 n'enseigne pas une solution permettant une mise en tension simultanée de toutes les manches de filtrage et un maintien en tension. Il n'enseigne pas non plus de solution permettant une maintenance simplifiée en ajustant simultanément la tension de toutes les manches en une seule opération.

Ce dispositif permet de définir de manière précise la distance entre les deux structure supports. En connaissant la longueur des manches et leur coefficient d'étirement, il est en effet possible de calculer la tension appliquée sur chaque manche précisément. Comme décrit précédemment, le dispositif comporte des moyens de mise sous tension de l'ensemble des au moins deux manches de filtrage sous la forme de moyens de translation de la structure support inférieure par rapport à la structure support supérieure, ladite structure support supérieure étant montée fixement par rapport au corps supérieur. Une fois mis en tension, ces moyens de translation permettent de maintenir les manches en tension.

Cela permet que la structure support supérieure reste fixe, seule la structure support inférieure se déplace dans la cartouche filtrante, ce qui réduit le nombre de pièces mobiles et simplifie la conception du dispositif.

Il est clair que ces moyens de mise sous tension permettent d'étirer simultanément l'ensemble desdites manches de filtrage et de les soumettre, de manière rapide et simple, à une même tension moyenne déterminée.

Par ailleurs, cette configuration est importante car, en positionnant les éléments de réglage de ces moyens de mise sous tension au-dessus de la structure support supérieure, cela permet à un opérateur d'effectuer les opérations de mise sous tension dans une ambiance sécurisée et peu polluée.

Selon une caractéristique de l'invention, les moyens de translation se présentent sous la forme d'au moins une tige filetée de la structure support inférieure coopérant avec au moins un trou taraudé correspondant d'une pièce de la structure support supérieure, ou inversement.

Cela permet d'assurer une grande précision de translation et de limiter les étincelles dangereuses dans un tel environnement explosif.

Selon une caractéristique de l'invention la structure support inférieure comporte des moyens de guidage en translation coopérant avec une paroi verticale intérieure de l'enveloppe notamment cylindrique périphérique, ces moyens de guidage se présentant sous la forme notamment de galets pivotant librement verticalement contre ladite paroi.

Cela permet de limiter les mouvements de la structure support inférieure autrement qu'en translation, ce qui limite les chocs et étincelles lors de son déplacement et lors de son utilisation.

Selon une caractéristique de l'invention le dispositif comporte des moyens de maintien individuels d'une tension de chaque manche de filtrage dans un intervalle de tension défini.

Cela permet de compenser des variations de tensions par suite de petites différences qui peuvent exister dans la longueur des manches, et qui sont dues à des défauts de fabrication, par exemple de couture. On peut ainsi obtenir des manches montées dans le dispositif qui présentent une tension comprise dans un même intervalle de tension défini.

Le document FR 2 856 936 n'enseigne pas une solution permettant de compenser un éventuel allongement d'une seule manche de filtrage, ce qui provoque une diminution de la tension néfaste exercée sur cette manche. Il enseigne une manipulation sur chaque manche par un opérateur avec un dispositif de tensions qui doit être déplacé d'une manche à l'autre, et présentant les problèmes décrits plus haut.

En fait, la combinaison de moyens de mise sous tension de toutes les manches de filtrage et les moyens de maintien individuels de mise sous tension dans un intervalle de tension défini permet d'assurer une mise en tension rapide des manches tout en assurant une homogénéité des tensions de chaque manche.

Lorsque les manches se détendent, la tension moyenne de l'ensemble des manches diminue, mais les moyens de maintien permettent de conserver une tension de chaque manche dans un intervalle satisfaisant. La maintenance est aussi simplifiée, puisqu'il suffit d'actionner les moyens de mise sous tension pour ramener la tension moyenne de l'ensemble des manches à une tension moyenne déterminée, notamment comprise entre trente (30) et quarante (40) kilogrammes, soit une force de traction comprise entre deux cent quatre-vingt-quatorze (294) Newton et trois cent quatre-vingt-douze (392) Newton.

Selon une caractéristique de l'invention, les moyens de maintien individuels d'une tension dans un intervalle de tension défini de chaque manche de filtrage comportent un organe de rappel élastique à l'extrémité inférieure de chaque manche de filtrage, configuré pour assurer une tension de ladite manche comprise dans un intervalle de tension défini.

Selon une caractéristique de l'invention, les organes de crochetage des manches de filtrage comportent une tige saillante de la manche de filtrage avec un élément d'accrochage, ledit élément d'accrochage étant destiné à coopérer avec une fente ouverte d'un profilé en tôle pliée adapté de la structure support inférieure.

Cela permet d'assembler rapidement l'extrémité inférieure de chaque manche à la structure support inférieure.

Comme enseignée dans le document FR 2 856 936, l'extrémité inférieure de chaque manche de filtrage peut être dotée d'un élément d'accrochage comportant une coupelle de fond, munie d'une tige saillante comportant un élément d'accrochage ; cet élément d'accrochage étant destiné à coopérer avec un profilé support de conformation adaptée, aménagé au niveau de la structure support inférieure.

Cet élément d'accrochage peut consister en un anneau chanfreiné configuré pour venir en contact avec le profilé en appui sur un ressort à spirale formant ledit organe de rappel élastique, s'appuyant lui-même contre un écrou-frein vissé sur un filetage aménagé sur l'extrémité de la tige.

La structure support inférieure peut comporter au moins un profilé support, en forme de tôle pliée, constitué d'une partie centrale s'étendant à la verticale, et dont l'extrémité supérieure est prolongée par un élément de retour à l'équerre ou sensiblement à l'équerre, s'étendant sur toute sa longueur. L'élément de retour correspondant peut être muni de plusieurs fentes ouvertes assurant chacune le passage d'une tige saillante de la manche et le positionnement de l'élément d'accrochage de ladite tige saillante. L'extrémité supérieure du ou des profilés supports peut comporter un élément de retour constitué de deux parties formant un dièdre. L'une desdites parties, dénommée partie horizontale, peut s'étendre à l'équerre ou sensiblement à l'équerre à partir de l'extrémité supérieure de la partie centrale du profilé support ; l'autre desdites parties, dénommée partie inclinée, s'étendant en biais vers le bas. Cet élément de retour peut être muni d'une pluralité de fentes ouvertes assurant pour chacune le passage d'une tige saillante de la manche, l'élément d'accrochage de ladite tige saillante étant destiné à venir se positionner sous la partie horizontale précitée.

Cela permet de simplifier l'assemblage des manches de filtrage à la structure support inférieure.

L'invention concerne un procédé de montage et de tension d'au moins deux manches de filtrage au sein d'un dispositif de filtration d'air tel que décrit ci avant, ledit procédé comportant les étapes suivantes :
- fixation des extrémités supérieures de au moins deux manches de filtrage sur une structure support supérieure par des organes d'assemblage adaptés,
- fixation des extrémités inférieures desdites au moins deux manches de filtrage, par des organes de crochetage individuels appropriés, sur une structure support inférieure,
- mise en tension simultanée desdites au moins deux manches de filtrage par des moyens de mises sous tension de l'ensemble des manches de filtrage exerçant sur chaque manche une tension moyenne déterminée, notamment comprise entre trente (30) et quarante (40) kilogrammes, soit une force de traction comprise entre deux cent quatre-vingt-quatorze (294) Newton et trois cent quatre-vingt-douze (392) Newton.

Le document FR 2 856 936 n'enseigne pas une mise en tension simultanée de toutes les manches de filtrage. Il n'enseigne pas non plus de solution permettant une maintenance simplifiée en ajustant simultanément la tension de toutes les manches du dispositif en une seule opération.

Il convient de noter que les étapes de montage selon l'invention diffèrent des enseignements du document FR 2 856 936, ce procédé selon l'invention permettant de simplifier le nombre de manipulations pour un montage et une maintenance d'au moins deux manches de filtrage dans un tel dispositif.

Pour la maintenance, il suffit simplement de mettre en œuvre la dernière étape de ce procédé décrit en mettant en tension simultanément l'ensemble des manches jusqu'à atteindre sur chaque manche une tension moyenne déterminée.

L'invention concerne une manche de filtrage comportant un organe de crochetage à son extrémité inférieure et un organe d'assemblage à son extrémité supérieure configurés pour permettre un rattachement de ladite manche dans une cartouche filtrante d'un dispositif tel que décrit précédemment.

L'invention concerne une installation de filtrage comportant au moins un tel dispositif tel que décrit précédemment.

### Brève description des figures

D'autres avantages et caractéristiques ressortiront mieux de la description qui va suivre d'un mode d'exécution de l'invention en référence aux figures annexées sur lesquelles :
[Fig 1] est une vue schématique en perspective et à parois semi transparentes d'un dispositif de filtration d'air à manches de filtrage selon l'invention,
[Fig 2] est une vue schématique partielle d'une cartouche filtrante du dispositif de la figure 1, dont une partie d'une paroi périphérique est manquante, laissant apparaitre des manches de filtrage s'étendant entre une structure support supérieure et une structure support inférieure,
[Fig 3] est une vue schématique de côté de la cartouche filtrante du dispositif de la figure 2,
[Fig 4] est une vue de détail d'une partie supérieure du dispositif de la figure 2,
[Fig 5] est une vue de détail de l'extrémité basse d'une manche de filtrage et d'une partie de la structure support inférieure du dispositif de la figure 2, et
[Fig 6] est une vue de détail schématique en coupe de l'extrémité haute d'une manche de filtrage et d'une partie de la structure support supérieure du dispositif de la figure 2.

### Description des modes de réalisation

L'invention concerne un dispositif de filtration d'air à manches de filtrage 1 ci-après désigné sous le terme « dispositif de filtration d'air 1 » ou « dispositif de filtration d'air 1 ». Il comporte de manière connue un corps supérieur 2 avec une ouverture de sortie 20 d'où l'air filtré par le dispositif de filtration d'air 1 est évacué. Le corps supérieur 2 est surmonté d'une coiffe 21.

Le dispositif de filtration d'air 1 comporte également une chambre de sédimentation 3 ici en forme d'entonnoir ou cylindrique, à parois verticales, disposée sous ledit corps supérieur 2, et munie de moyens de reprise des déchets à sa partie inférieure.

Le dispositif de filtration d'air 1 comporte aussi une cartouche filtrante 4, verticale, comportant une enveloppe ici cylindrique périphérique 40 et des manches de filtrage 5, au moins deux, s'étendant dans l'enveloppe cylindrique périphérique 40, intercalées entre ladite chambre de sédimentation 3 et la coiffe 21 du corps supérieur 2.

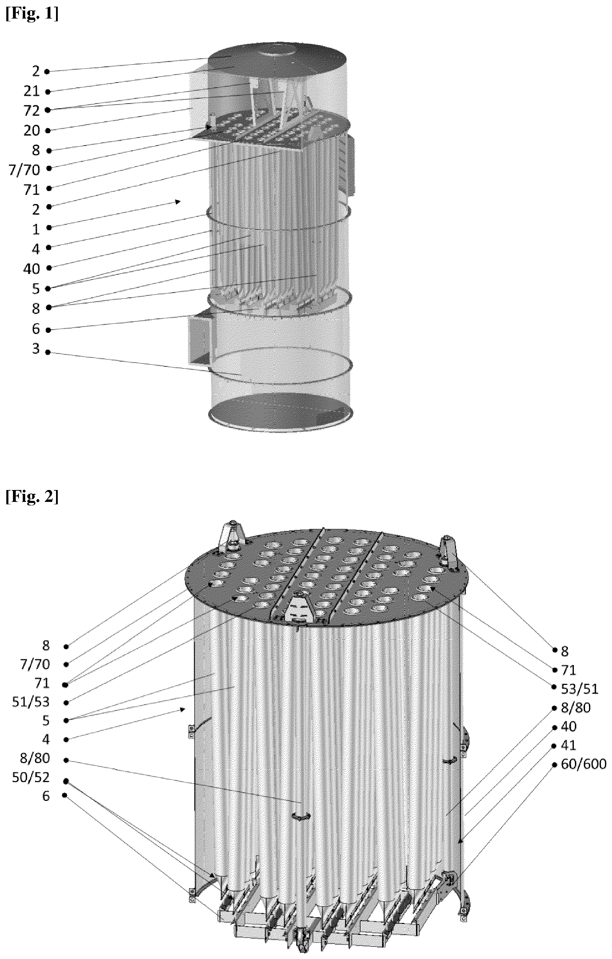

Ces manches de filtrages 5, ci-après désignées sous le terme « manches 5 », sont rattachées sensiblement verticalement au sein de la cartouche filtrante 4 d'une part à une structure support inférieure 6 et d'autre part à une structure support supérieure 7 en forme de plateau 70 à ouvertures ici circulaires 71. La structure support supérieure 7 peut comporter au moins une ossature de renfort 72 permettant de rigidifier le plateau 70, comme illustré sur la figure 1.

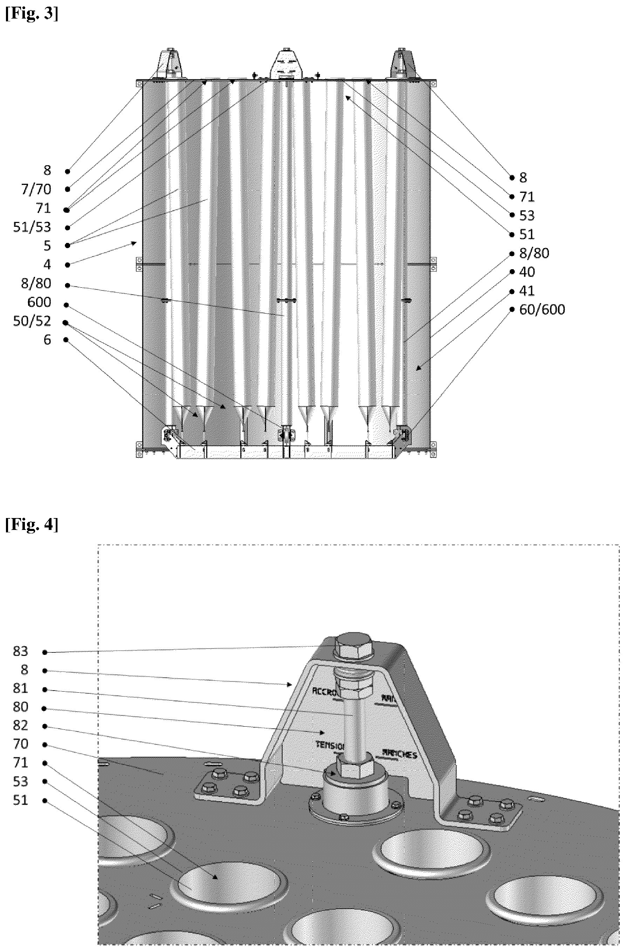

Les manches 5 sont sensiblement verticales, c'est-à-dire qu'elle peuvent être portées par un axe vertical, ou présentant un angle d'inclinaison par rapport à un axe vertical de moins de cinq (5) degrés. Comme illustré sur la figure 3, les manches peuvent présenter un angle d'inclinaison par rapport à un axe vertical de trois (3) degrés, à plus ou moins deux (2) degrés, afin de faciliter l'installation et la mise en position des manches 5.

En référence à la figure 1, le dispositif de filtration d'air 1 est considéré dans une position d'utilisation, avec la chambre de sédimentation 3 posée et en appui sur le sol et le corps supérieur 2 au-dessus.

Ainsi, comme illustré sur les figures, le bas du dispositif de filtration d'air 1 est en bas des figures, et le haut du dispositif de filtration d'air 1 est en haut des figures.

Le dispositif de filtration d'air 1 comporte de plus des moyens de mise sous tension 8 de l'ensemble des manches de filtrage 5 à une tension moyenne déterminée, notamment comprise entre trente (30) et quarante (40) kilogrammes, soit une force de traction comprise entre deux cent quatre-vingt-quatorze (294) Newton et trois cent quatre-vingt-douze (392) Newton.

Ces moyens de mise sous tension 8 se présentent sous la forme de moyens de translation 80 de la structure support inférieure 6 par rapport à la structure support supérieure 7. La structure support supérieure 7 est montée dans le dispositif de filtration d'air 1 fixement par rapport au corps supérieur 2 par soudage, rivetage, boulonnage ou tout autre moyen permettant un montage fixe. Ce montage peut être réversible ou non.

Comme illustré sur les figures, les moyens de translation 80 peuvent se présenter sous la forme de trois tiges filetée 81 de la structure support inférieure 6, espacées régulièrement et coopérant avec des trous taraudés de pièces 82 de la structure support supérieure 7, ou inversement.

Chaque tige filetée 81 peut être montée d'une part libre en rotation avec la structure support inférieure 6, et d'autre part dépassant de la structure support supérieure 7 et présentant à son extrémité supérieure un écrou 83 solidaire fixement à ladite tige filetée 81, comme illustré sur la figure 4.

Cela permet de pouvoir actionner les moyens de mise sous tension 8 de l'ensemble des manches de filtrage 5 depuis le dessus du plateau 70, qui est une zone moins dangereuse et poussiéreuse pour le personnel d'intervention.

Ainsi, une mise en rotation d'un écrou 83 permet d'entrainer en rotation la tige filetée 81 correspondante. Le dispositif de filtration d'air 1 peut comporter des moyens d'entrainement, comme par exemple des arbres de moteurs électriques pas à pas, amovibles ou non, comportant des embouts configurés pour entrainer en rotation Les écrous 83 simultanément ou non. Il est ainsi possible de faire translater la structure support inférieure 6 par rapport à la structure support supérieure en vissant ou dévissant les écrous 83. Il est également possible d'ajuster l'inclinaison de la structure support inférieure 6 en agissant sur certains des écrous 83.

Selon un mode de réalisation non illustré ici, le dispositif de filtration d'air 1 peut comporter des moyens de contrôle de l'horizontalité de la structure support inférieure 6, sous la forme par exemple de niveaux à bulles intercalés entre les tiges filetées 81.

Selon un mode de réalisation non illustré ici, le dispositif de filtration d'air 1 peut comporter des moyens de commande de la rotation de chaque tige filetée 81 à distance, sous la forme d'une interface homme machine commandant un moteur électrique pas à pas connecté à chaque tige filetée 81. Le dispositif de filtration d'air 1 peut aussi comporter des moyens de mesure de la hauteur de translation de la structure support inférieure 6 sous la forme par exemple d'un capteur de déplacement sur ledit moteur pas à pas.

Il est ainsi possible de mettre en tension l'ensemble des manches de filtrage 5 à distance en toute sécurité, sans avoir à entrer dans le dispositif de filtration d'air 1, et de calculer la tension globale exercée sur l'ensemble des manches pour en déduire une tension moyenne exercée sur chaque manche 5.

La structure support inférieure 6 peut comporter des moyens de guidage en translation 60 coopérant avec une paroi verticale intérieure 41 de l'enveloppe cylindrique périphérique 40. Ces moyens de guidage en translation peuvent se présenter, comme illustré sur les figures 2 et 3, sous la forme de trois galets 600 espacés régulièrement sur la périphérie de la structure support inférieure 6, montés libres en rotation verticalement par rapport à ladite structure support inférieure 6. Ces galets 600 peuvent venir en appui contre la paroi verticale 41 de l'intérieur de l'enveloppe cylindrique périphérique 40.

Chaque manche 5 comporte une extrémité inférieure 50 et une extrémité supérieure 51. L'extrémité inférieure 50 de chaque manche comporte un organe de crochetage 52 apte à lui permettre un accrochage à la structure support inférieure 6, et un organe d'assemblage 53 apte à lui permettre un assemblage à la structure support supérieure 7.

L'organe de crochetage 52 sera décrit plus loin.

L'organe d'assemblage 53 peut, de manière connue, se présenter sous la forme d'un anneau déformable solidaire à l'extrémité supérieure 51 de la manche 5, et il peut comporter une rainure annulaire s'étendant sur son contour externe, destinée à venir s'encastrer sur le contour interne des ouvertures circulaires 71 de la structure support supérieure 7, de façon à bloquer la manches 5 correspondant dans une ouverture circulaire 71 correspondante.

Cet anneau déformable peut présenter une partie haute présentant une collerette d'un diamètre supérieur au diamètre des ouvertures circulaires 71, de manière à empêcher que la manche 5 correspondante ne puisse tomber par accident en totalité à travers une ouverture circulaire 71.

Le dispositif de filtration d'air 1 peut comporter des moyens de maintien individuels 54 d'une tension dans un intervalle de tension défini de chaque manche de filtrage 5. L'intervalle de tension défini est sensiblement de plus ou moins cinq (5) kilogrammes de tension, soit un intervalle de tension de plus ou moins quarante-neuf (49) Newton par rapport à la valeur de la tension moyenne déterminée, qui est notamment comprise entre trente (30) et quarante (40) kilogrammes, soit comprise entre deux cent quatre-vingt-quatorze (294) Newton et trois cent quatre-vingt-douze (392) Newton.

Lesdits moyens de maintien individuels 54 d'une tension dans un intervalle de tension défini de chaque manche de filtrage 5 peuvent comporter un organe de rappel élastique 55, situé à l'extrémité inférieure 50 de chaque manche 5, ledit organe de rappel élastique 55 étant configuré pour assurer une tension de ladite manche 5 comprise dans l'intervalle de tension défini ci avant.

L'organe de crochetage 52 de chaque manche 5 permettant son accroche à la structure support inférieure 6 peut comporter une tige saillante 520 de la manche de filtrage avec un élément d'accrochage 521, ledit élément d'accrochage 521 étant destiné à coopérer avec une fente ouverte 61 d'un profilé 62 en tôle pliée adapté de la structure support inférieure 6.

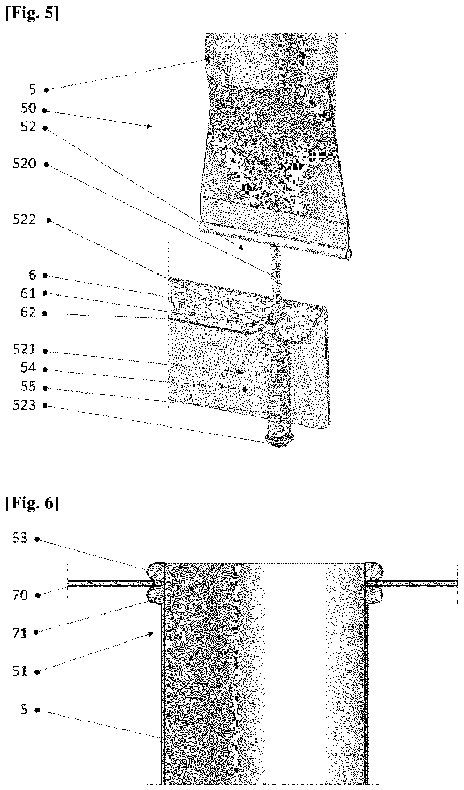

Comme illustré sur la figure 5, cet élément d'accrochage 521 peut se présenter sous la forme :
- d'un anneau chanfreiné 522 configuré pour venir en contact avec le profilé,
- d'un ressort à spirale, formant ledit organe de rappel élastique 55, en appui contre le dessous de l'anneau chanfreiné 522,
- d'un écrou frein 523 vissé sur une extrémité libre de la tige saillante 520, le ressort venant en appui contre cet écrou frein 523. Cet écrou frein 523 peut être borgne.

Le ressort à spirale formant ledit organe de rappel élastique 55 se retrouve ainsi intercalé entre l'anneau chanfreiné 522 et l'écrou frein 523.

Plus généralement, on peut envisager tout type d'organe de crochetage équivalent particulier, comportant les moyens de maintien individuels 54 d'une tension dans un intervalle de tension défini de chaque manche de filtrage 5.

Concernant la structure support inférieure 6, elle peut être constituée d'une pluralité des profilés 62 en tôle pliée parallèles fixés sur un renfort aménagé à une extrémité inférieure de l'enveloppe cylindrique périphérique 40, la fixation en question pouvant être réalisée au moyen de platines de liaison.

Les profilés peuvent être constitués d'une partie centrale verticale délimitée par une bordure d'extrémité supérieure et une bordure d'extrémité inférieure. La bordure d'extrémité inférieure peut être prolongée sur toute sa longueur par un élément de retour à l'équerre, pour améliorer la rigidité des profilés 62.

La bordure d'extrémité supérieure de chaque profilé 62 peut être munie d'un élément de retour, en forme de dièdre, constitué d'une première et d'une seconde partie. La première partie peut s'étendre à l'équerre, selon un plan horizontal ou sensiblement horizontal. La seconde partie peut se prolonger de manière inclinée vers le bas. L'élément de retour peut présenter plusieurs fentes ouvertes 61, s'étendant transversalement sur les deux parties dudit élément de retour supérieur. L'extrémité de chaque fente ouverte 61 peut présenter une forme générale en Vé au niveau de l'ouverture. L'autre extrémité de chaque fente ouverte peut ne s'étendre que partiellement sur la première partie horizontale de l'élément de retour.

Lors du montage d'une manche 5 dans une cartouche 4, on peut faire passer et pendre l'extrémité inférieure 50 et l'organe de crochetage 52 de la manche 5 à travers une ouverture circulaire 71 correspondante du plateau 70.

La distance entre la structure support inférieure 6 et la structure support supérieure peut être configurée pour être inférieure de quelques millimètres à quelques centimètres à la longueur des manches de filtrage 5.

On fixe alors l'organe d'assemblage 53 de la manche 5 à l'ouverture circulaire 71 correspondante comme illustré sur la figure 6.

La manche est légèrement étirée et la tige saillante 520 de la manche 5 est positionnée au niveau de l'extrémité évasée de la fente ouverte 61 concernée, l'anneau chanfreinée 522 étant disposé sous l'extrémité de la seconde partie de l'élément de retour en comprimant le ressort à spirale. La forme en Vé de cette extrémité 33 facilite l'insertion de la tige saillante 520 dans la fente ouverte 61 correspondante.

Il suffit ensuite de pousser la tige saillante 520 dans la fente ouverte 61 pour finaliser le positionnement. En effet, la conformation inclinée de la seconde partie de l'élément de retour permet un cheminement de l'organe de crochetage 52 jusqu'à venir en position contre la face inférieure de la première partie horizontale de l'élément de retour. La première partie inclinée de l'élément de retour supérieur forme une sorte de butée, destinée à maintenir en position l'organe de crochetage 52 contre la première partie horizontale de l'élément de retour, lorsque la manche 6 est maintenue tendue. Pour désactiver la fixation de l'organe de crochetage 52 sur la structure support inférieure 6, il suffit de supprimer la tension exercée sur la manche 5 et de désengager la tige saillante 520 de la fente ouverte 61, ou alternativement de tirer vers le bas l'anneau chanfreiné pour permettre un désengagement de la tige saillantes 520 hors de la fente ouverte 61.

L'organe de rappel élastique 55 et plus particulièrement le ressort à spirale peut être un ressort dit à force (de rappel) constante ou un ressort dit à tension (de rappel) constante.

L'invention concerne également un procédé de montage et de tension d'au moins deux manches de filtrage au sein d'un dispositif de filtration d'air 1 tel que décrit ci avant. Ce procédé comporte les étapes suivantes :
- fixation des extrémités supérieures 51 de au moins deux manches de filtrage 5 sur une structure support supérieure 7 par des organes d'assemblage 53 adaptés,
- fixation des extrémités inférieures 50 desdites au moins deux manches de filtrage 5, par des organes de crochetage 52 individuels appropriés, sur une structure support inférieure 6,
- mise en tension simultanée desdites au moins deux manches de filtrage 5 par des moyens de mises sous tension 8 de l'ensemble des manches de filtrage 5 exerçant sur chaque manche 5 une tension moyenne déterminée, notamment comprise entre trente (30) et quarante (40) kilogrammes, soit une force de traction comprise entre deux cent quatre-vingt-quatorze (294) Newton et trois cent quatre-vingt-douze (392) Newton.

Il convient de noter que la fixation des manches de filtrage 5 dans la cartouche filtrante 4 peut se faire sur un site de fabrication de la cartouche filtrante 4, qui est ensuite acheminée sur son lieu d'utilisation ou d'installation. Une fois installée, il est possible de mettre en œuvre les moyens de mises sous tension 8 pour mettre en tension simultanée l'ensemble des manches de filtrage 5 à une tension moyenne déterminée. Le dispositif de filtration d'air 1 peut comporter des moyens de mesure ou de détection de la tension exercée par les moyens de mises sous tension 8 de l'ensemble des manches de filtrage 5, sous la forme par exemple de capteurs de traction sur chacun des moyens de translation 80.

Le dispositif peut comporter en outre des moyens de contrôle des moyens de maintien individuels 54 d'une tension dans un intervalle de tension défini de chaque manche de filtrage, sous la forme par exemple de détecteurs de la compression du ressort à spirale de chaque manche 5.

L'invention concerne en outre au moins une manche de filtrage 5 configurée permettre un rattachement de ladite manche 5 dans une cartouche filtrante 4 d'un dispositif de filtration d'air 1 tel que décrit précédemment.

Cette au moins une manche de filtrage 5 comporte comme indiqué plus haut un organe de crochetage 52 à son extrémité inférieure 50 et un organe d'assemblage 53 à son extrémité supérieure 51, lui permettant d'être monté dans la cartouche filtrante 4 du dispositif de filtration d'air 1.

Au moins un dispositif de filtration d'air 1 tel que décrit ci avant peut être inclus dans une installation permettant de capter des polluants pour ensuite les filtrer et les récupérer.

## Revendications

1. Dispositif de filtration d'air (1) à manches de filtrage comportant :
- un corps supérieur (2) d'où l'air filtré par le dispositif de filtration d'air (1) est évacué,
- une chambre de sédimentation (3), notamment en forme d'entonnoir ou cylindrique, disposée sous ledit corps supérieur (2), et munie de moyens de reprise des déchets à sa partie inférieure,
- une cartouche filtrante (4) verticale comportant une enveloppe notamment cylindrique périphérique (40) et au moins deux manches de filtrage (5) s'étendant dans l'enveloppe notamment cylindrique périphérique (40) entre ladite chambre de sédimentation (3) et une coiffe (21) du corps supérieur (2), lesdites manches (5) étant rattachées verticalement au sein de la cartouche filtrante (4), d'une part à une structure support inférieure (6) par des organes de crochetage (52) des extrémités inférieures des manches (50), et d'autre part à une structure support supérieure (7) en forme de plateau (70) à ouvertures notamment circulaires (71) par des organes d'assemblage (53) des extrémités supérieures des manches (51), et
- des moyens de mise sous tension (8) de l'ensemble des manches de filtrage (5) à une tension moyenne déterminée, **caractérisé en ce que** les moyens de mise sous tension (8) de l'ensemble des manches de filtrage (5) sont sous la forme de moyens de translation (80) de la structure support inférieure (6) par rapport à la structure support supérieure (7), ladite structure support supérieure (7) étant montée fixement par rapport au corps supérieur (2), et **en ce que** les moyens de translation (80) se présentent sous la forme d'au moins une tige filetée (81) de la structure support inférieure (6) coopérant avec au moins un trou taraudé correspondant d'une pièce (82) de la structure support supérieure (7), ou inversement.

2. Dispositif de filtration d'air (1) selon la revendication 1 **caractérisé en ce que** la structure support inférieure (6) comporte des moyens de guidage en translation (60) coopérant avec une paroi intérieure verticale (41) de l'enveloppe notamment cylindrique périphérique (40) sous la forme notamment de galets (600) pivotant librement verticalement contre ladite paroi (41).

3. Dispositif de filtration d'air (1) selon l'une quelconque des revendications 1 ou 2 **caractérisé en ce qu'**il comporte des moyens de maintien individuels (54) d'une tension dans un intervalle de tension défini de chaque manche de filtrage (5).

4. Dispositif de filtration d'air (1) selon la revendication 3 **caractérisé en ce que** les moyens de maintien individuels (54) d'une tension dans un intervalle de tension défini de chaque manche de filtrage (5) comportent un organe de rappel élastique (55) à l'extrémité inférieure (50) de chaque manche de filtrage (5) configuré pour assurer une tension de ladite manche (5) comprise dans un intervalle de tension défini.

5. Dispositif de filtration d'air (1) selon l'une quelconque des revendications 1 à 4 **caractérisé en ce que** les organes de crochetage (52) des au moins deux manches de filtrage (5) comportent une tige saillante (520) de la manche de filtrage (5) avec un élément d'accrochage (521), ledit élément d'accrochage (521) étant destiné à coopérer avec une fente ouverte (61) d'un profilé en tôle pliée (62) adapté de la structure support inférieure (6).

6. Procédé de montage et de tension d'au moins deux manches de filtrage (5) au sein d'un dispositif de filtration d'air (1) selon l'une des revendications 1 à 5 ledit procédé comportant les étapes suivantes :
- fixation des extrémités supérieures (51) de au moins deux manches de filtrage (5) sur une structure support supérieure (7) par des organes d'assemblage (53) adaptés,
- fixation des extrémités inférieures (50) desdites au moins deux manches de filtrage (5), par des organes de crochetage (52) individuels appropriés, sur une structure support inférieure (6), et
- mise en tension simultanée desdites au moins deux manches de filtrage (5) par des moyens de mises sous tension (8) de l'ensemble des manches de filtrage (5) exerçant sur chaque manche (5) une tension moyenne déterminée.

7. Installation de filtrage comportant au moins un dispositif de filtration d'air (1) à manches de filtrage (5) selon l'une des revendications 1 à 5.

## Patentansprüche

1. Luftfiltervorrichtung (1) mit Filterschläuchen, umfassend:
- einen oberen Körper (2), aus dem die von der Luftfiltervorrichtung (1) gefilterte Luft abgeführt wird,
- eine Sedimentationskammer (3), insbesondere in Trichter- oder zylindrischer Form, die unter dem oberen Körper (2) angeordnet und an ihrem unteren Teil mit Schmutzauffangmitteln ausgestattet ist,
- eine vertikale Filterkartusche (4), die einen insbesondere zylindrischen Umfangsmantel (40) und mindestens zwei Filterschläuche (5) umfasst, die sich in dem insbesondere zylindrischen Umfangsmantel (40) zwischen der Sedimentationskammer (3) und einer Kappe (21) des oberen Körpers (2) erstrecken, wobei die Schläuche (5) vertikal innerhalb der Filterkartusche (4) einerseits mit Organen zum Einhängen (52) der unteren Enden der Schläuche (50) an einer unteren Trägerstruktur (6), und andererseits mit Organen zum Verbinden (53) der oberen Enden der Schläuche (51) an einer oberen Trägerstruktur (7) in Form von Platten (70) mit insbesondere kreisförmigen Öffnungen (71) festgemacht sind, und
- Mittel zum Spannen (8) aller Filterschläuche (5) auf eine bestimmte mittlere Spannung,
**dadurch gekennzeichnet, dass** die Mittel zum Spannen (8) aller Filterschläuche (5) in Form von Mitteln zum Verschieben (80) der unteren Trägerstruktur (6) in Bezug auf die obere Trägerstruktur (7) vorliegen, wobei die obere Trägerstruktur (7) in Bezug auf den oberen Körper (2) fest montiert ist, und dass die Verschiebemittel (80) sich in Form von mindestens einer Gewindestange (81) der unteren Trägerstruktur (6), die mit mindestens einem entsprechenden Gewindeloch eines Teils (82) der oberen Trägerstruktur (7) zusammenwirkt, oder umgekehrt, darstellen.

2. Luftfiltervorrichtung (1) nach Anspruch 1, **dadurch gekennzeichnet, dass** die untere Trägerstruktur (6) Verschiebeführungsmittel (60), die mit einer vertikalen Innenwand (41) des insbesondere zylindrischen Umfangsmantels (40) zusammenwirken, insbesondere in Form von vertikal frei an die Wand (41) schwenkenden Rollen (600), umfasst.

3. Luftfiltervorrichtung (1) nach einem der Ansprüche 1 oder 2, **dadurch gekennzeichnet, dass** sie einzelne Mittel (54) zum Halten einer Spannung in einem definierten Spannungsbereich jedes Filterschlauches (5) umfasst.

4. Luftfiltervorrichtung (1) nach Anspruch 3, **dadurch gekennzeichnet, dass** die einzelnen Mittel (54) zum Halten einer Spannung in einem definierten Spannungsbereich jedes Filterschlauches (5) ein elastisches Rückstellorgan (55) am unteren Ende (50) jedes Filterschlauches (5) umfassen, das so eingerichtet ist, dass es eine Spannung des Schlauches (5) innerhalb eines definierten Spannungsbereichs sicherstellt.

5. Luftfiltervorrichtung (1) nach einem der Ansprüche 1 bis 4, **dadurch gekennzeichnet, dass** die Organe zum Einhängen (52) der mindestens zwei Filterschläuche (5) eine aus dem Filterschlauch (5) vorspringende Stange (520) mit einem Einhängelement (521) umfassen, wobei das Einhängelement (521) dazu bestimmt ist, mit einem offenen Schlitz (61) eines geeigneten gefalteten Blechprofils (62) der unteren Trägerstruktur (6) zusammenzuwirken.

6. Verfahren zum Montieren und Spannen von mindestens zwei Filterschläuchen (5) innerhalb einer Luftfiltervorrichtung (1) nach einem der Ansprüche 1 bis 5, wobei das Verfahren die folgenden Schritte umfasst:
- Befestigen der oberen Enden (51) von mindestens zwei Filterschläuchen (5) mit geeigneten Verbindungsorganen (53) an einer oberen Trägerstruktur (7),
- Befestigen der unteren Enden (50) der mindestens zwei Filterschläuche (5) mit geeigneten einzelnen Einhängorganen (52) an einer unteren Trägerstruktur (6), und
- gleichzeitiges Spannen der mindestens zwei Filterschläuche (5) mit Mitteln zum Spannen (8) aller Filterschläuche (5), die auf jeden Schlauch (5) eine bestimmte mittlere Spannung ausüben.

7. Filteranlage, die mindestens eine Luftfiltervorrichtung (1) mit Filterschläuchen (5) nach einem der Ansprüche 1 bis 5 umfasst.

## Claims

1. Air filtration device (1) with filter sleeves including:
- an upper body (2) from which the air filtered by the air filtration device (1) is evacuated,
- a sedimentation chamber (3), in particular in the form of a funnel or cylinder, arranged underneath said upper body (2), and provided with waste recovery means in its lower part,
- a vertical filter cartridge (4) including a peripheral casing (40), in particular cylindrical, and at least two filter sleeves (5) extending into the peripheral casing (40), in particular cylindrical, between said sedimentation chamber (3) and a cap (21) of the upper body (2), said sleeves (5) being attached vertically inside the filter cartridge (4), on the one hand, to a lower support structure (6) by hooking elements (52) at the lower ends of the sleeves (50), and, on the other hand, to an upper support structure (7) in the form of a plate (70) with, in particular, circular openings (71) by assembly members (53) at the upper ends of the sleeves (51), and
- means (8) for applying tension to all of the filter sleeves (5) at a determined average tension,
**characterised in that** the means (8) for applying tension to all of the filter sleeves (5) are in the form of means for translating (80) the lower support structure (6) relative to the upper support structure (7), said upper support structure (7) being fixed with respect to the upper body (2), and **in that** the translation means (80) are in the form of at least one threaded rod (81) on the lower support structure (6) engaging with at least one corresponding threaded hole in part (82) of the upper support structure (7), or vice versa.

2. Air filtration device (1) according to claim 1, **characterised in that** the lower support structure (6) comprises means for guiding in translation (60) engaging with a vertical inner wall (41) of the peripheral casing (40), in particular cylindrical, in the form of rollers (600) which pivot freely vertically against said wall (41).

3. Air filtration device (1) according to any one of claims 1 or 2, **characterised in that** it includes individual means (54) for maintaining a tension, within a defined tension range, of each filter sleeve (5).

4. Air filtration device (1) according to claim 3, **characterised in that** the individual means (54) for maintaining a tension, within a defined tension range, of each filter sleeve (5) include an elastic return member (55) at the lower end (50) of each filter sleeve (5) configured to ensure that a tension of said sleeve (5) falls within a defined tension range.

5. Air filtration device (1) according to any one of claims 1 to 4, **characterised in that** the hooking members (52) of the at least two filter sleeves (5) include a protruding rod (520) of the filter sleeve (5) with a hooking element (521), said hooking element (521) being intended to engage with an open slot (61) in a suitable folded sheet metal profile (62) of the lower support structure (6).

6. Method for mounting and tensioning at least two filter sleeves (5) inside an air filtration device (1) according to one of claims 1 to 5, said method comprising the following steps:
- securing the upper ends (51) of at least two filter sleeves (5) to an upper support structure (7) by means of suitable assembly members (53),
- securing the lower ends (50) of said at least two filter sleeves (5) to a lower support structure (6) by means of suitable individual hooking members (52), and
- simultaneous application of tension to said at least two filter sleeves (5) by means for tensioning (8) all of the filter sleeves (5), which apply a specified average tension to each sleeve (5).

7. Filtration installation comprising at least one air filtration device (1) with filter sleeves (5) according to any one of claims 1 to 5.
